# EUROPÄISCHE PATENTSCHRIFT

(11) **EP 0 529 209 B1**
(45) Veröffentlichungstag und Bekanntmachung des Hinweises auf die Patenterteilung: **09.08.1995**
(21) Anmeldenummer: 92109128.6
(22) Anmeldetag: 29.05.1992
(51) Int. Cl.: B60P 7/13

(54) **Transportsicherung**
Securing device for transport
Fixation pour le transport

(30) Priorität: 29.08.1991 DE 4128774
(43) Veröffentlichungstag der Anmeldung: 03.03.1993
(73) Patentinhaber: EDELHOFF POLYTECHNIK GMBH & CO., D-58640 Iserlohn (DE)
(72) Erfinder: Köhler, Günther, Dr., W-5900 Siegen (DE); Wagener, Paul Werner, W-5902 Netphen 1 (DE)
(74) Vertreter: Laufhütte, Dieter, Dr.-Ing.

(56) Entgegenhaltungen:
- EP-A- 0 298 384
- EP-A- 0 382 458
- EP-A- 0 431 690
- CH-A- 362 981
- DE-A- 3 537 863
- GB-A- 1 109 009
- US-A- 4 826 371

## Beschreibung

Die Erfindung betrifft eine Trransportsicherung für Ladegut, insbesondere Container, das auf einem in einem Rahmen eines Transportmittels, insbesondere eines Waggons, drehbaren Gestell angeordnet ist, mit mindestens einem in Rahmen schwenkbar gelagerten Halteelement, das nach Schwenken in seine Sicherungsposition das Ladegut festlegt.

Es sind bereits Transportsicherungen für Container beispielsweise aus der EP-A-0 298 384 bekannt. Hier werden Container, die mit einem Hebezeug, z.B. einem Wechselgerät, auf der Ladefläche eines Transportfahrzeugs absetzbar sind, durch an der Unterseite des Behälters in der Ebene seiner Auflagebereiche auf der Ladefläche fest angeordnete Justierelemente sowie an der Ladefläche angeordnete Halteorgane gesichert, wobei an jeweils einem Halteorgan ein zugeordnetes Justierelement in der Transportlage des Behälters gehalten ist. Hierbei sind die Justierelemente und Halteorgane als gegenseitig in Eingriff bringbare Formschlußelemente ausgebildet. Diese Transportsicherung ist vorzugsweise für LKW-Ladeflächen vorgesehen, d.h. bei Ladeflächen, die starr mit dem Fahrgestell verbunden sind.

Demgegenüber ist es beim Einsatz von derartigen Ladeflächen auf schienengebundenen Eisenbahnwaggons bekannt, daß die Container mittels eines Wechselgerätes auf ein auf der Längsachse des Waggons drehbares Gestell in der Art abgesetzt werden, daß das Gestell um einen Drehpunkt im Rahmen des Waggons nach außen gedreht wird, der LKW rückwärts an das Gestellende heranfährt und den Container mittels des Wechselgerätes auf das herausgedrehte Gestell aufgeschoben wird. Nachdem der Container vom Fahrzeug abgekoppelt ist, kann das auf einem Drehkranz aufgelagerte Gestell entweder über einen Hebelarm manuell oder über ein Hydraulikaggregat in Transportposition zurückgedreht werden, bis der Container vollständig auf dem Eisenbahnwaggon steht. Es ist auch bereits bekannt, mehrere dieser drehbaren Gestelle hintereinander auf einem Waggon anzuordnen, so daß in einfacher Weise mehrere Container hintereinander auf einem Waggon abgesetzt werden können.

Bei diesen bekannten drehbaren Gestellen, die auch als WaggonWeichen bezeichnet werden, wird die Sicherung, d.h. die Arretierung des Ladeguts nur über entsprechende Ausgestaltung des Drehgestells erreicht. Das bedeutet aber, daß das Gestell so ausgelegt sein muß, daß insbesondere Längskräfte, die infolge des Fahrbetriebs, d.h. der Beschleunigung und Abbremsung auf das Ladegut wirken, von diesem selbst aufgenommen werden müssen. Hierdurch bedingt müssen die drehbaren Gestelle eine hohe Festigkeit aufweisen, was zu sehr schweren Gestellen führt. Des weiteren besteht ein Nachteil in der Ausführungsform der bekannten Waggon-Weichen darin, daß für unterschiedlich große Container keine einheitliche Verriegelung auf dem Transportfahrzeug vorhanden ist.

Eine gattungsgemäße Transportsicherung ist bereits aus der EP-A-0 431 690 bekannt. Dort ist das schwenkbare Halteelement an einer Drehwelle angeordnet, die quer zur Längsrichtung des Waggons angeordnet ist. Dabei ist die quer zum Waggon verlaufende Welle so angeordnet, daß das als Haken ausgebildete Halteelement an entsprechend am Container vorzusehenden Eingriffselementen eingeschwenkt wird. Hierdurch ist es allerdings bedingt, daß der Container entsprechend angeformte Eingriffselemente an der Stelle aufweist, an der das entsprechende Hakenelement in der Transportstellung und damit Sicherungsstellung eingeschwenkt werden soll.

Es stellt sich nun die Aufgabe, eine Transportsicherung zu schaffen, die bei handelsüblichen Ladegut, beispielsweise Containern, mit üblichen Kufen angewandt werden kann.

Erfindungsgemäß wird diese Aufgabe durch den kennzeichnenden Teil des Anspruchs 1 gelöst. Demnach sind zwei in Längsrrichtung des Waggons parallel zueinander verlaufende Wellen schwenkbar gelagert, an denen jeweils ein Halteelement drehfest angeordnet ist. Die beiden Halteelemente liegen in ihrer Sicherungsposition an der Stirnwand an und an den Wellen ist zusätzlich mindestens jeweils ein hakenförmiges Verriegelugselement drehfest so angeordnet, daß es in der Sicherungsposition über Kufen des Ladegutes schwenkbar ist. Durch die hakenförmige Ausbildung kann das zusätzliche Verriegelungselement einerseits vor einer seitlichen Verschiebung wie auch andererseits vor einem Abheben nach oben sichern. Mehrere Verriegelungselemente können über Schub- Zugstangen synchron gekoppelt sein, so daß die gegebenenfalls an beiden Seiten des Containers angeordneten Wellen zwangsweise zusammen gedreht werden.

Gemäß einer besonders vorteilhaften Ausgestaltung der Erfindung ist seitlich an dem mindestens einen Halteelement ein Anschlag vorgesehen, gegen den frei verdrehbar auf der zugehörigen Welle gelagerte weitere Halteelemente über Federkraft angedrückt sind. Hierdurch kann Ladegut unterschiedlicher Abmessungen in einfacher Weise durch Einschwenken der Halteelemente gesichert werden. Dies wird gemäß dieser Ausführung dadurch erreicht, daß das fest mit der Welle verbundene Halteelement derart angeordnet ist, daß beim entsprechenden Einschwenken der Halteelemente das Ladegut mit der größten Abmessung an diesem zu liegen kommt. Die entsprechenden federbelasteten Halteelemente werden beim Verschwenken in die Sicherungsposition durch die dann entsprechend überstehende Kante des Ladeguts gegen die Federkraft von dem am drehfest angeordneten Halteelement vorgesehenen Anschlag wegbewegt. Wird nun ein entsprechendes kürzeres Ladegut durch die verschwenkbaren Halteelemente gesichert, werden die durch Federkraft am Anschlag des fest mit der Welle verbundenen Halteelements anliegenden Halteelemente ebenfalls mit verschwenkt, da keine Kante des Ladeguts im Wege steht.

Die Halteelemente können innerhalb des Rahmens auch derart angeordnet sein, daß sie in der Sicherungsposition an den Seitenwänden des Ladeguts anliegen.

Weitere Einzelheiten und Vorteile der vorliegenden Erfindung werden anhand des in der Zeichnung dargestellten Ausführungsbeispiels näher erläutert. Hier zeigen:
- Fig. 1:: eine Draufsicht auf einen Eisenbahnwaggon mit einer Transportsicherung gemäß einer Ausführungsform der vorliegenden Erfindung,
- Fig. 2:: eine Seitenansicht des Waggons gemäß Fig. 1 und
- Fig. 3:: eine schematische Detaildarstellung der Ausführungsform des hier beschriebenen Ausführungsbeispiels in zwei Ansichten.

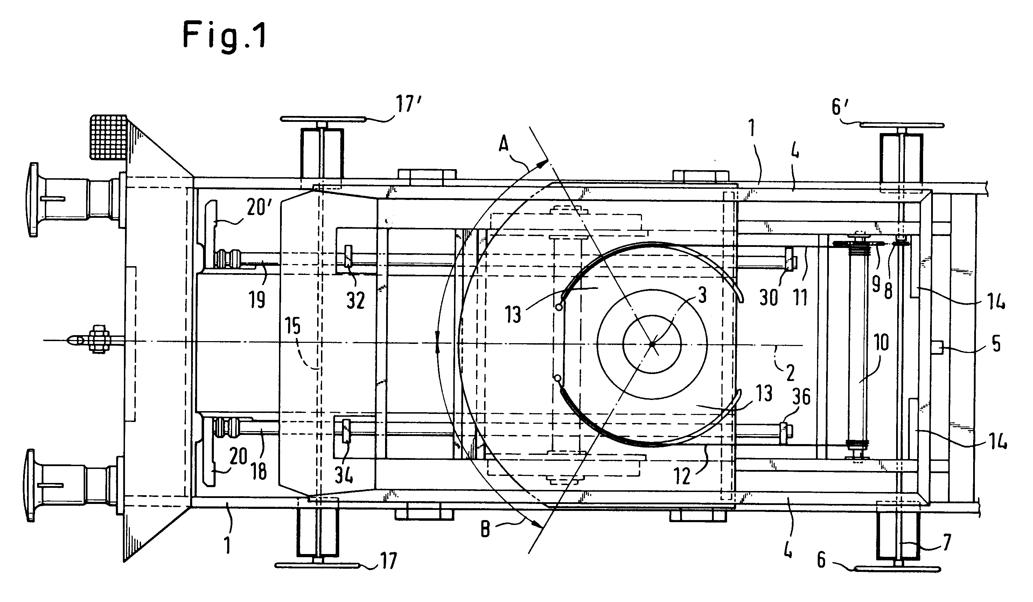

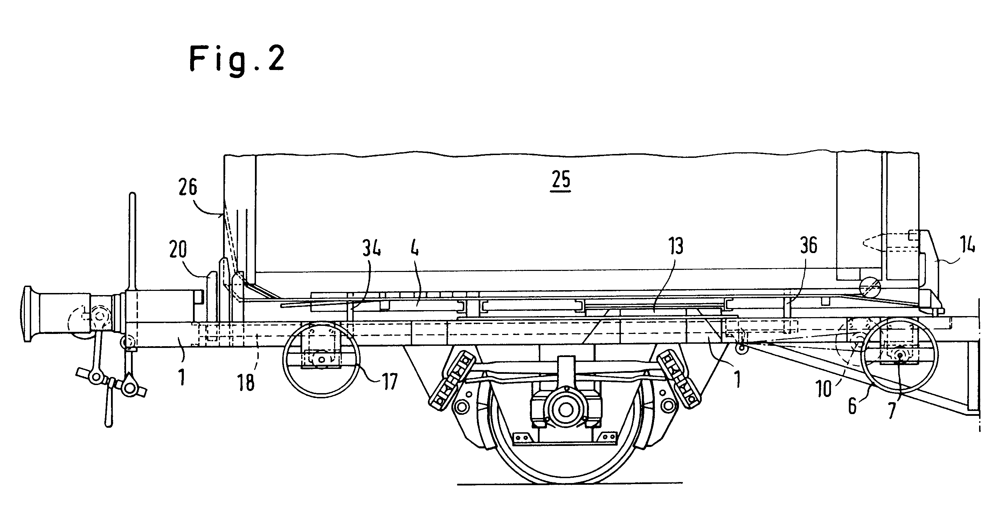

In dem in Fig. 1 dargestellten Eisenbahnwaggon ist auf seiner Mittelachse 2 ein um einen Punkt 3 drehbares Gestell 4 angeordnet. Gemäß der Seitenansicht in Fig. 2 ist ein Container 25 auf den Schienen des Gestells 4 aufgelagert. Das Gestell ist über eine Arretierung 5 mit dem Rahmen 1 verbunden. Zur Beladung des Gestells 4 wird zunächst über ein nicht dargestelltes Gestänge diese Arretierung 5 gelöst. Die Arretierung 5 kann beispielsweise durch einen federbelasteten Bolzen gebildet sein, der in der Transportstellung des Gestells 4 in eine in einem Träger des Rahmens 1 angeordnete Bohrung schnappt. Über ein Stellrad 6 bzw. 6' ist eine Welle 7 verdrehbar im Rahmen 1 angeordnet, welche über ein drehfest mit dieser verbundenes Kettenritzelpaar 8 und 9 eine Kette und über diese eine weitere Welle 10, die ebenfalls ein Kettenritzelpaar aufweist, verdreht. Über die Welle 10 sind zwei gegensinnig gewickelte Stahlseile oder Ketten 11 und 12, die mit einem Drehkranz 13 des Gestells 4 verbunden sind, entsprechend auf- bzw. abgewickelt. Über dieses Seil- oder Kettenpaar kann das drehbar gelagerte Gestell 4 wahlweise in Pfeilrichtung A oder Pfeilrichtung B verschwenkt werden.

Zum Übersetzen des Ladegutes, beispielsweise des Containers 25, fährt ein hier nicht dargestellter LKW an das entsprechend ausgeschwenkte Gestell 4 heran, auf das der Container 25 mit einem üblichen Wechselgerät so weit überschiebbar ist, bis dieser an Anschläge 14, wie sie der Fig. 2 zu entnehmen sind, anliegt. Die Anschläge 14 sind vorzugsweise zum Schutz vor Beschädigungen mit einer Holz- oder Kunststoffoberfläche versehen. Nach Abkoppeln des Wechselgeräts ist nun das drehbare Gestell 4 in seine Transportstellung zurückschwenkbar. Dies erfolgt über die bereits zuvor beschriebenen Ketten oder Seile 11 und 12 durch manuelles Verdrehen der Stellräder 6 bzw. 6' oder alternativ dazu über einen - in dieser Ausführungsform nicht vorgesehenen - automatischen Schwenktrieb. Durch Einschnappen der Arretierung 5 in der entsprechenden Bohrung ist das drehbare Gestell zunächst sicherbar.

Im Rahmen 1 des Waggons sind in Längsrichtung verlaufende Wellen 18 und 19 gelagert, die durch entsprechende Umlenkgetriebe mit einer quer zum Fahrzeug ausgerichteten Welle 15, die wiederum Stellräder 17 und 17' aufweist, zusammenwirken. Auf den Wellen 18 und 19 ist jeweils mindestens ein Halteelement 20 bzw. 20' in der in Fig. 1 dargestellten Art und Weise angeordnet. Die Halteelemente 20 bzw. 20' sind drehfest mit den entsprechenden Wellen 18 und 19 verbunden. In Fig. 1 sind die Halteelemente in der zurückgezogenen Position dargestellt, d.h. daß die Halteelemente in die Ebene des Rahmens 1 des Waggons geschwenkt sind. Dagegen sind die Halteelemente 20 in der Darstellung gemäß Fig. 2 in ihre Sicherungsposition ausgeschwenkt, wo sie an der Stirnfläche 26 des Ladeguts 25 anliegen. Die Verschwenkung erfolgt über den zuvor beschriebenen Stelltrieb manuell über die Stellräder 17 bzw. 17'.

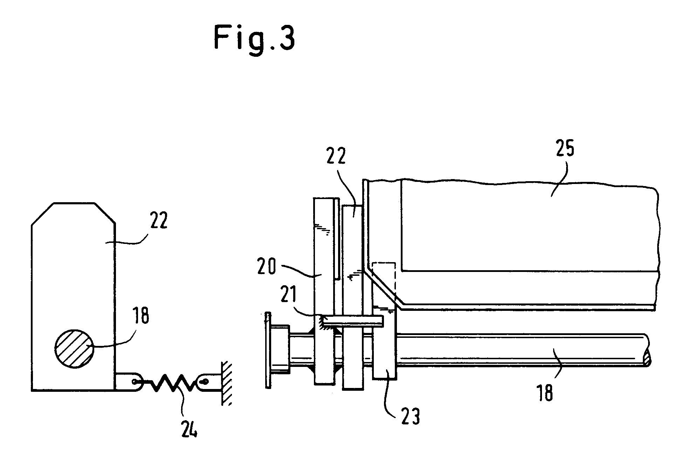

In der Detaildarstellung gemäß Fig. 3 ist die Welle 18 mit dem entsprechend fest angeschweißten Halteelement 20 dargestellt. An dem Halteelement 20 ist ein Anschlag 21 angeschweißt. Auf der Welle 18 sind drehbar zusätzliche Halteelemente 22 und 23 angeordnet. In der gemäß der linken Darstellung in Fig. 3 dargestellten Art und Weise wird durch eine entsprechende Zugfeder 24 das Halteelement 22 und das Halteelement 23 gegen den Anschlag 21 gedrückt. Somit wird bei entsprechendem Aufschwenken des Halteelements 20 aus der zurückgezogenen Position im Rahmen 1 gemäß der Fig. 1 in die Sicherungsposition gemäß Fig. 2 die zusätzlichen Halteelemente 22 und 23 aufgrund der Kraft der Feder 24 entsprechend mit ausschwenken. Sollte jedoch, wie in der rechten Darstellung gemäß Fig. 3 angedeutet, ein entsprechender Container 25 ein weites Schwenken eines des lose auf der Welle 18 angeordneten Halteelements, hier des Halteelements 23, verhindern, so legt sich dieses entsprechende Halteelement 23 unter der Kraft der Feder 24 an die Außenkante des Containers 25 an. In dem hier dargestellten Beispiel können die Halteelemente 20 und 22 in ihre Sicherungsposition verschwenkt werden, so daß der Container 25 ohne Spiel in seiner Längsrichtung festgelegt werden kann.

Durch diese Ausführungsform können sich entsprechend dem Ausmaß des Ladeguts die Halteelemente, die einen Kraftschluß zum Waggonrahmen ergeben, aufrichten. Beim Niederschwenken des Halteelements 20 werden die weiteren Halteelemente 22, 23 über den Anschlag 21 mitgenommen. Die Dimensionierung, d.h. insbesondere die Dicke, der einzelnen Halteelemente ist auf die möglichen Größen der Ladeeinheiten abgestimmt.

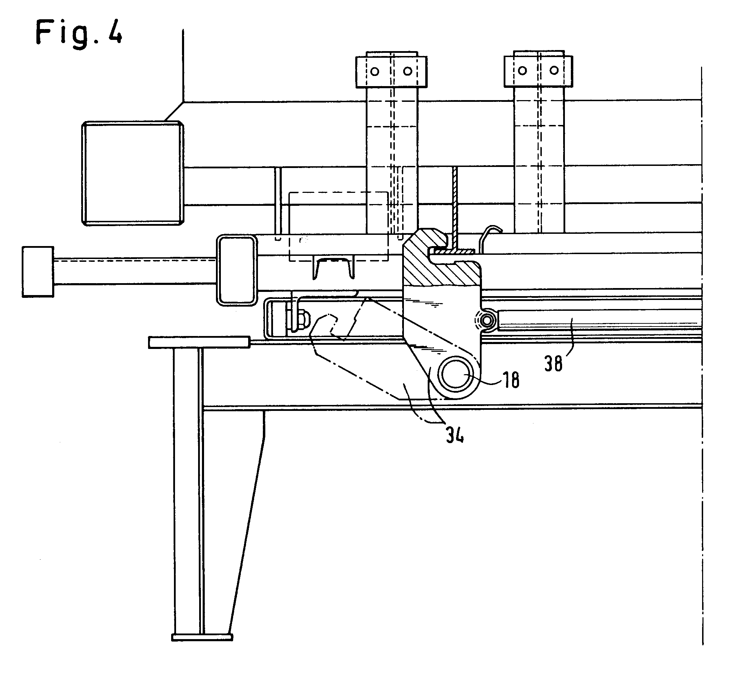

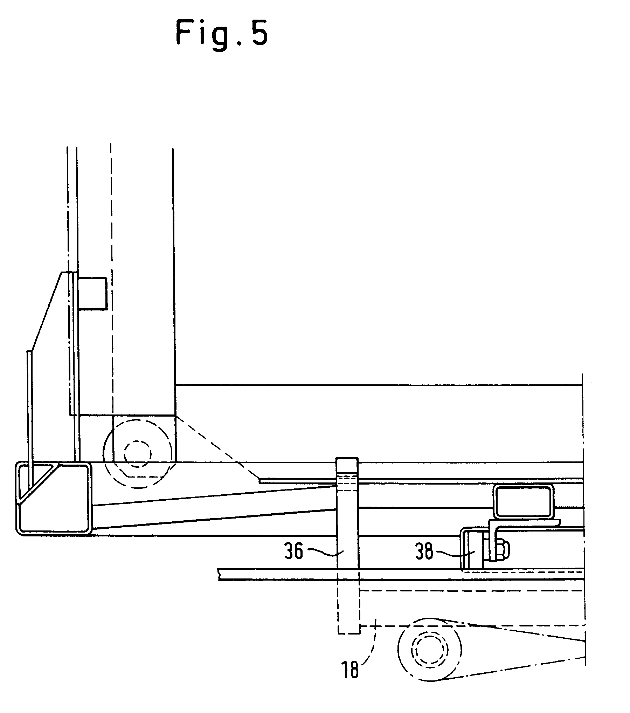

In den Figuren 1 und 2 sind an den Wellen 19 bzw. 18 mit diesen seitlich verschwenkbare Verriegelungselemente 30, 32, 34, 36 dargestellt. Wie aus Fig. 4 ersichtlich, sind die Verriegelungselemente 30, 32, 34, 36 hakenförmig ausgestaltet und können so mit dem entsprechenden Hakenfortsatz über Containerkufen eines Containers geschwenkt werden. Die Verriegelungselemente 30, 32, 24 und 36 können, insbesondere wie in den Figuren 4 und 5 gezeigt, über Schub-Zugstangen (38) derart miteinander gekoppelt sein, daß ein synchrones Ver- bzw. Entriegeln eines aufgesetzten Containers ermöglicht ist. Durch die entsprechenden Schub-Zugstangen (38) ist es gewährleistet, daß beide Wellen (18, 19) stets gleichzeitig gedreht werden.

Mit Hilfe der hier beschriebenen Transportsicherung können Container unterschiedlicher Länge, aber auch beispielsweise Plattformen etc. zum Transport gesichert werden.

## Patentansprüche

1. Transportsicherung für Ladegut (25) insbesonder Container, das auf einem in einem Rahmen (1) eines Transportmittels, insbesondere eines Waggons, drehbaren Gestell (4) angeordnet ist, mit mindestens einem im Rahmen (1) schwenkbar gelagerten Halteelement (20, 20'), das nach Schwenken in seine Sicherungsposition das Ladegut festlegt,
**dadurch gekennzeichnet**,
daß im Rahmen (1) zwei in Längsrichtung des Waggons parallel zueinander verlaufende Wellen (18, 19) schwenkbar gelagert sind, an denen jeweils ein Halteelement (20, 20') drehfest angeordnet ist, daß die beiden Halteelemente (20, 20') in ihrer Sicherungsposition an der Stirnwand (26) des Ladegutes (25) anliegen und daß an den Wellen (18, 19) zusätzlich mindestens jeweils ein hakenförmiges Verriegelungselement (30, 32, 34, 36) so drehfest angeordnet ist, daß es in der Sicherungsposition über Kufen des Ladegutes (25) schwenkbar ist.

2. Transportsicherung nach Anspruch 1, dadurch gekennzeichnet, daß an dem mindestens einen Halteelement (20) ein Anschlag (21) vorgesehen ist, gegen den frei verdrehbar auf der zugehörigen Welle (18) gelagerte weitere Halteelemente (22, 23) über Federkraft angedrückt sind.

3. Transportsicherung nach Anspruch 2, dadurch gekennzeichnet, daß die Halteelemente (22, 23) in der Sicherungsposition an den Seitenwänden des Ladegutes anliegen.

4. Transportsicherung nach einem der Ansprüche 1-3, dadurch gekennzeichnet, daß mehrere Verriegelungselemente (30, 32, 34, 36) über Schub-Zugstangen (38) synchron gekoppelt sind.

## Claims

1. In-transit securing means for freight (25), in particular containers, which is arranged on an undercarriage (4) which can rotate in a frame (1) of a means of transport, in particular of a wagon, having at least one retaining element (20, 20') which is mounted pivotably in the frame (1) and, after pivoting into its securing position, fixes the freight, characterized in that mounted pivotably in the frame (1) are two shafts (18, 19) which run parallel to one another in the longitudinal direction of the wagon and on which in each case one retaining element (20, 20') is arranged in a rotationally fixed manner, in that the two retaining elements (20, 20'), in their securing position, butt against the end wall (26) of the freight (25), and in that, in addition, at least in each case one hook-shaped locking element (30, 32, 34, 36) is arranged in a rotationally fixed manner on the shafts (18, 19) such that, in the securing position, it can pivot via skids of the freight (25).

2. In-transit securing means according to Claim 1, characterized in that provided on the at least one retaining element (20) is a stop (21) against which further retaining elements (22, 23), which are mounted in a freely rotatable manner on the associated shaft (18), are pressed via spring force.

3. In-transit securing means according to Claim 2, characterized in that the retaining elements (22, 23), in the securing position, butt against the side walls of the freight.

4. In-transit securing means according to one of Claims 1-3, characterized in that a plurality of locking elements (30, 32, 34, 36) are coupled synchronously via push-pull rods (38).

## Revendications

1. Dispositif de sécurité pour le transport d'un produit de chargement (25), notamment d'un conteneur qui est disposé sur un châssis (4) tournant dans le cadre (1) d'un moyen de transport, notamment d'un wagon, avec au moins un élément de retenue (20, 20') monté de façon pivotante sur un cadre (1) qui, après le pivotement dans sa position de sécurité, fixe le produit de chargement, caractérisé en ce que sont disposés de façon pivotante dans le cadre (1) deux arbres (18, 19) s'étendant dans la direction longitudinale du wagon parallèlement l'un à l'autre auxquels est disposé de façon non rotative respectivement un élément de retenue (20, 20'), que les deux éléments de retenue (20, 20') dans leur position de sécurité, s'appliquent contre la paroi frontale (26) du produit de chargement (25) et qu'il est disposé aux arbres (18, 19) additionnellement au moins respectivement un élément de verrouillage (30, 32, 34, 36) en forme de crochet de façon non tournante qu'il puisse être pivoté dans la position de sécurité sur les patins du produit de chargement (25).

2. Dispositif de sécurité de transport selon la revendication 1, caractérisé en ce qu'il est réalisé à l'élément de retenue (20), dont au moins un est prévu, une butée (21) contre laquelle sont poussés sous la force de ressort d'autres éléments de retenue (22, 23) montés de façon librement tournante sur l'arbre associé (18).

3. Dispositif de transport selon la revendication 2, caractérisé en ce que les éléments de retenue (22, 23) s'appliquent dans la position de sécurité aux parois latérales du produit de chargement.

4. Dispositif de sécurité de transport selon l'une des revendications 1 à 3, caractérisé en ce que plusieurs éléments de verrouillage (30, 32, 34, 36) sont accouplés de manière synchrone par des tiges de poussée et de traction (38).
